# EUROPÄISCHE PATENTANMELDUNG

(11) **EP 2 330 292 A2**
(43) Veröffentlichungstag der Anmeldung: **08.06.2011**
(21) Anmeldenummer: 10189626.4
(22) Anmeldetag: 02.11.2010
(51) Int. Cl.: F03D 1/06

(54) **Gurt eines Rotorblatts einer Windenergieanlage**

(30) Priorität: 07.12.2009 DE 102009047570
(71) Anmelder: REpower Systems AG, 22297 Hamburg (DE)
(72) Erfinder: Bendel, Urs, 24787, Fockbek (DE)
(74) Vertreter: Seemann, Ralph

(57) **Zusammenfassung**

Die Erfindung betrifft einen Gurt (20) eines Rotorblatts (10) einer Windenergieanlage, umfassend eine Mehrzahl von faserverstärkten Einzellagen, die miteinander durch ein Harz verbunden sind.

Die Erfindung zeichnet sich dadurch aus, dass wenigstens eine faserverstärkte Einzellage eine Längssteifigkeit von mehr als 50.000 N/mm bei einer Dicke von mehr als 0,9 mm hat.

## Beschreibung

Die Erfindung betrifft einen Gurt eines Rotorblatts einer Windenergieanlage, umfassend eine Mehrzahl von faserverstärkten Einzellagen, die miteinander durch ein Harz verbunden sind.

Ein Hauptgurt im Rotorblatt einer Windenergieanlage wird aus einer Vielzahl von Einzellagen aufgebaut, um insbesondere eine für das Rotorblatt notwendige Längssteifigkeit zu erreichen. Die notwendige Längssteifigkeit ergibt sich aus den Lasten, die auf dem Rotorblatt wirken und beispielsweise dem Parameter des Turmfreigangs, also dem Abstand der Rotorblattspitze zur Turmaußenwand. Je nach Größe des Rotorblatts werden unterschiedlich viele Lagen eingelegt. So werden beispielsweise bei einem 50 m langen Rotorblatt 90 Lagen von Glasfaserverstärkungen verwendet. Üblicherweise werden beim Bau der Hauptgurte von Rotorblättern faserverstärkte Einzellagen verwendet, die Verstärkungsfasern bzw. ein Gelege aus entsprechenden Fasern aufweisen, die eine Lagendicke von ca. 0,7 mm bei einem Faserlagengewicht von ca. 980 g/m² aus Glasfaserrovingen aufweisen. Das ausgehärtete Laminat aus diesem Gelege hat bei einem Faservolumengehalt von ca. 50% ein Elastizitätsmodul in Längsrichtung von ca. 39.000 N/mm². Das Laminat ist hierbei vorzugsweise aus Epoxidharz gebildet. Dieses ergibt eine Längssteifigkeit von ca. 27.300 N/mm. Alternativ kann der Hauptgurt auch aus kohlefaserverstärkten Einzellagen mit beispielsweise einer Dicke von ca. 0,45 mm je Einzellage bei einem Faser-Flächengewicht von ca. 500 g/m² aus Kohlefaserrovingen und einem Elastizitätsmodul in Längsrichtung im Laminat von ca. 128.200 N/mm² aufweisen. Es ergibt sich hieraus eine Steifigkeit von ca. 57.690 N/mm. Die Steifigkeit bzw. Längssteifigkeit ergibt sich aus einer Multiplikation des Elastizitätsmoduls mit der Dicke der Einzellage.

Die Verwendung derartiger faserverstärkter Einzellagen hat zum einen den Nachteil, dass die Herstellung der Hauptgurte viel Zeit in Anspruch nimmt. Zum anderen besteht insbesondere bei Gurten aus Kohlefasern bzw. Kohlefaserrovingen der Nachteil, dass diese sehr teuer sind.

Es ist Aufgabe der vorliegenden Erfindung, kostengünstige und schnell herzustellende Gurte für Rotorblätter einer Windenergieanlage anzugeben, die insbesondere ohne Kohlefasern auskommen.

Gelöst wird diese Aufgabe durch einen Gurt eines Rotorblatts einer Windenergieanlage, umfassend eine Mehrzahl von faserverstärkten Einzellagen, die miteinander durch ein Harz verbunden sind, wobei wenigstens eine faserverstärkte Einzellage eine Längssteifigkeit von mehr als 50.000 N/mm bei einer Dicke von mehr als 0,9 mm hat.

Der Gurt ist vorzugsweise ein oder der Hauptgurt eines Rotorblatts, wobei dieser bzw. diese beispielsweise an der Saugseite innen an der Blattschale und/oder an der Druckseite innen an der Blattschale angeordnet ist bzw. sind.

Eine faserverstärkte Einzellage umfasst ein Gelege aus Rovingen, die nebeneinander und aufeinander gelegt sind und so die entsprechende Dicke der Einzellage erzeugen, wobei die Gelege entsprechend genäht bzw. gewirkt sind. Es können auch gewebte Gelege Verwendung finden. Diese sind allerdings etwas kostenintensiver, weswegen genähte Gelege bzw. gewirkte Gelege zu bevorzugen sind. Die Einzellage hat vorzugsweise ein Faservolumengehalt von 50% bis 60% und umfasst ansonsten ein Harz. Die Mehrzahl von faserverstärkten Einzellagen ist entsprechend durch das Harz miteinander verbunden.

Die verwendeten Harze sind insbesondere Kunstharze oder Reaktionsharze, die durch Polymerisations-, Polyadditions- oder Polykondensationsreaktion synthetisch hergestellt sind. Die vorzugsweise verwendeten Kunstharze bestehen in der Regel aus zwei Hauptkomponenten, nämlich einem Harz und einem Härter, die zusammen die reaktionsfähige Harzmasse bzw. das reaktionsfähige Harz ergeben. Durch Härtung steigt die Viskosität an und nach abgeschlossener Härtung erhält man einen entsprechenden Verbund des Harzes mit den Fasern in den Einzellagen und einen Verbund der mehreren Einzellagen untereinander. Im Rahmen der Erfindung beinhaltet der Begriff "Harz" auch ein Harz mit einem Härter.

Der Gurt bzw. Hauptgurt kann auch in Längserstreckung des Rotorblatts geteilt sein. Hierzu wird insbesondere auf die DE 10 2009 03 31 65 der Anmelderin verwiesen. Insbesondere hat der Gurt im Wesentlichen die Kontur des Rotorblatts in dem Bereich, in dem der jeweilige Gurt im Rotorblatt angeordnet ist. Das heißt, der Gurt erstreckt sich entsprechend in längsaxialer Richtung des Rotorblatts oder in Längserstreckung und ist dort entsprechend dem Rotorblatt gekrümmt und verwunden, wobei die Verwindung insbesondere eine Art Verwringung um die Längsachse bzw. um die Längserstreckung darstellt und die Krümmung insbesondere eine Art Verbiegung des Rotorblatts zur Längsachse ist. Der Gurt ist somit entsprechend vorzugsweise "geflext" bzw. insbesondere auch "getwistet".

Der Gurt wird vorzugsweise in einer Kunststofftechnik gefertigt. Hierbei wird wenigstens ein Harz und wenigstens eine Faserlage, insbesondere eine Glasfaserlage oder Basaltfaserlage verwendet. Zur Fertigung kann eine Spritz-Press-Technik (Resin Transfer Moulding; RTM), eine Infusionstechnik (Resin Infusion Moulding; RIM) verwendet werden, insbesondere eine durch Vakuum unterstützte Infusionstechnik (Vacuum Assisted Resin Infusion; VAR) und/oder eine Laminiertechnik verwendet werden, beispielsweise mit so genannten Prepregs.

Vorzugsweise haben im Wesentlichen alle Einzellagen jeweils eine Längssteifigkeit von mehr als 50.000 N/mm bei einer jeweiligen Dicke von mehr als 0,9 mm.

Vorzugsweise ist die Längssteifigkeit der Einzellage größer als 60.000 N/mm, insbesondere größer als 70.000 N/mm, insbesondere größer als 80.000 N/mm, insbesondere größer als 90.000 N/mm, insbesondere größer als 100.000 N/mm. Die Längssteifigkeit der Einzellage kann vorzugsweise bis zu 150.000 N/mm betragen.

Die Längssteifigkeit ist bei Verwendung von Glasfaserrovingen in der Einzellage vorzugsweise in einem Bereich von 50.000 N/mm bis 150.000 N/mm, insbesondere vorzugsweise in einem Bereich zwischen 70.000 N/mm und 110.000 N/mm. Bei Verwendung von Basaltrovingen in der Einzellage liegt die Längssteifigkeit vorzugsweise in einem Bereich zwischen 70.000 N/mm und 150.000 N/mm, insbesondere vorzugsweise zwischen 90.000 N/mm und 120.000 N/mm.

Vorzugsweise ist die Dicke der Einzellagen größer oder gleich 0,95 mm, insbesondere größer oder gleich 1,5 mm, insbesondere größer oder gleich 2,0 mm, insbesondere größer oder gleich 2,5 mm. Vorzugsweise kann die Dicke der Einzellage insbesondere bis zu 5 mm betragen. Eine besonders bevorzugte Dicke liegt bei 2,6 mm für ein Glasfasergelege und bei 0,95 mm für ein Balsaltgelege. Vorzugsweise sind die Fasern der faserverstärkten Einzellagen aus Glasfasern und/oder Basaltfasern. Ferner vorzugsweise ist die Einzellage im Wesentlichen ein unidirektionales Fasergelege, bei dem mehr als 80%, insbesondere mehr als 89%, der Fasern in Längsrichtung des Gurts ausgerichtet sind.

Vorzugsweise ist das Flächengewicht der Einzellage mehr als 1.000 g/m², insbesondere mehr als 2.000 g/m², insbesondere mehr als 3.000 g/m², insbesondere mehr als 3.500 g/m². Bei dem Faserflächengewicht handelt es sich um das Gewicht einer Faserfläche auf 1 m² in Gramm, wobei die Fasern nicht mit Harz getränkt sind. Das Faserflächengewicht ist insbesondere vorzugsweise maximal 4.000 g/m². Vorzugsweise liegt das Gewicht einer Faserlage im Bereich von 1.000 g/m² bis 4.000 g/m², insbesondere vorzugsweise zwischen 2.000 g/m² und 3.500 g/m².

Vorzugsweise ist der Gurt ohne Kohlefasern und ohne Aramidfasern oder alternativ im Wesentlichen ohne Kohlefasern und im Wesentlichen ohne Aramidfasern ausgestaltet. Im Wesentlichen ohne diese Fasern bedeutet im Rahmen der Erfindung insbesondere, dass der Anteil dieser Fasern im Vergleich zu den anderen Fasern weniger als 5 % beträgt. Besonders bevorzugt ist natürlich die Variante ohne Kohlefasern und ohne Aramidfasern. Hierdurch ist eine sehr kostengünstige Herstellung entsprechender Gurte möglich.

Vorzugsweise ist die Einzellage als Prepreg ausgestaltet. Ein Prepreg ist im Rahmen der Erfindung insbesondere die Kurzform für Preimpregnated Fibers, also vorimprägnierte Fasern. Es handelt sich hierbei um ein Fasergelege, das schon mit Harz vorgetränkt ist. Es handelt sich insofern um ein Fasermatrixhalbzeug, das beim Rotorblattbau an sich bekannt ist.

Besonders bevorzugt ist es, wenn wenigstens ein Lagenende einer Einzellage geschäftet ist und insbesondere als Zickzack ausgeschnitten ist. Hierdurch wird sehr effizient einer Delamination an den Lageenden bzw. an einem Lageende der Einzellagen bzw. des Gurts entgegengewirkt. Unter Schäften einer Einzellage wird insbesondere ein Anfasen der Einzellage, insbesondere ein Verjüngen zum Ende der Einzellage hin verstanden. Insbesondere vorzugsweise ist die Mehrzahl von faserverstärkten Einzellagen im Gurt zum Ende des Gurts hin geschäftet bzw. gefast, also verjüngt ausgebildet, so dass sich insgesamt eine Fase bzw. Schäftung des Gurtes zu wenigstens einem Ende des Gurtes hin ergibt. Hierdurch werden Delaminationsprobleme im Wesentlichen vermieden. Eine entsprechende Schäftung bzw. Anfasung kann dadurch gegeben sein, dass die Lageenden der Einzellagen, und zwar insbesondere jeder Einzellage, in Form eines Zickzack ausgeschnitten ist, so dass die Rovinge der Einzellagen sich entsprechend verteilen können, so dass am Ende der Einzellage hin eine Verdünnung der Einzellage entsteht. Durch Verwendung eines Zickzackschnitts ergibt sich eine gleichmäßige Verdünnung zum Ende hin, also eine ungefähr gleichförmige Anfasung bzw. Fase.

Vorzugsweise ist eine Zusatzlage am Lagenende des Gurts über die geschäfteten Enden aufgebracht, insbesondere laminiert. Hierdurch wird eine Delamination noch besser vermieden. Unter Schäftung wird insbesondere auch ein Anfasen verstanden. Durch das Anfasen, Schäften bzw. insbesondere auch durch das Ausschneiden in Zickzackform, und zwar in einer Richtung des in das Rotorblatt eingebrachten Gurts von der Profilvorderkante zur Profilhinterkante können die einzelnen Fasern bzw. Rovinge in der jeweiligen Lage etwas zur Seite ausweichen, so dass sich die Lagendicke kontinuierlich verringert. Hierdurch wird das Widerstandsniveau der Einzellage gegen Delaminieren deutlich erhöht und so auch die Verwendung von sehr dicken Lagen vereinfacht. Durch die Zusatzlage am Lagenende, die die Lagenenden abdeckt, entsteht eine seitliche Stufung statt einer Höhenstufung, die vorzugsweise bei einer Infusion verschmiert.

Vorzugsweise ist ein Rotorblatt einer Windenergieanlage mit wenigstens einem erfindungsgemäßen Gurt versehen. Das Rotorblatt weist vorzugsweise eine Längserstreckung auf, die sich von einer Rotorblattwurzel im Wesentlichen zu einer Rotorblattspitze erstreckt, wobei wenigstens in einem Bereich des Rotorblatts ein aerodynamisches Querschnittprofil vorgesehen ist, das eine Profilvorderkante (Nase) und eine Profilhinterkante aufweist, die über eine Saugseite und eine Druckseite des Querschnittprofils verbunden sind.

Im Rahmen der Erfindung ist ein Gurt bzw. der Hauptgurt ein wesentliches tragendes Element eines Rotorblatts, das ausgebildet ist, um Schlagkräfte, Drehmomente und/oder Biegekräfte aufzunehmen. Bei einem Gurt handelt es sich insbesondere um ein glasfaserverstärktes Kunststoffgelege, das mit mehreren Lagen, insbesondere aus Glasfasermatten bzw. Glasfasergelegen oder anderen Fasergelegen, alleine oder in Kombination mit anderen Fasern wie Basaltfasern oder alleine aus Basaltfasern zu einer entsprechenden Stabilität in Verbindung mit einem Polyesterharz oder eine Epoxidharz oder einem anderen Harz führt. Die Dicke eines Gurtes hängt von der Blattlänge und den für einen Standpunkt einer Windenergieanlage berechneten Belastungsparametern ab. Die Dicke kann somit im Bereich von 2 cm bis 10 cm liegen. Entsprechend kann eine Breite des Gurtes im Bereich von 5 cm bis 50 cm oder noch breiter vorgesehen sein. Es können auch zwei Gurte, die zusammen ein Gurtpaar bilden, Verwendung finden, die dann zusammen eine Breite von bis zu 1 m aufweisen können. Hierzu wird insbesondere auf die DE 10 2009 033 165 der Anmelderin verwiesen.

Vorzugsweise ist der Gurt ein Hauptgurt, der sich im Wesentlichen von einer Rotorblattwurzel bis zu einer Rotorblattspitze erstreckt, wobei weniger als 60 Einzellagen, insbesondere weniger als 50 Einzellagen, insbesondere weniger als 40 Einzellagen, insbesondere weniger als 30 Einzellagen, im Gurt vorgesehen sind. Vorzugsweise sind mehr als 20 Einzellagen vorgesehen. Vorzugsweise sind 20 bis 60 Einzellagen, insbesondere vorzugsweise 30 bis 50 Einzellagen, vorgesehen.

Vorzugsweise hat der Gurt eine Länge von mehr als 30 m, insbesondere mehr als 35 m, insbesondere mehr als 40 m, insbesondere mehr als 45 m, insbesondere mehr als 50 m. Vorzugsweise ist die Länge des Gurts bis 70 m. Insbesondere vorzugsweise ist eine Gurtlänge von 30 m bis 70 m, insbesondere 35 m bis 60 m, insbesondere 40 m bis 50 m, vorgesehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische dreidimensionale Darstellung eines Rotorblatts,
- Fig. 2: eine schematische Schnittdarstellung einer Herstellungsform für die Herstellung eines Gurtes mit einem schon entsprechend hergestellten Gurt,
- Fig. 3: eine schematische Innenansicht eines Teils eines Rotorblatts und
- Fig.4: eine schematische Schnittdarstellung entlang des Schnitts A-A der Fig. 3.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

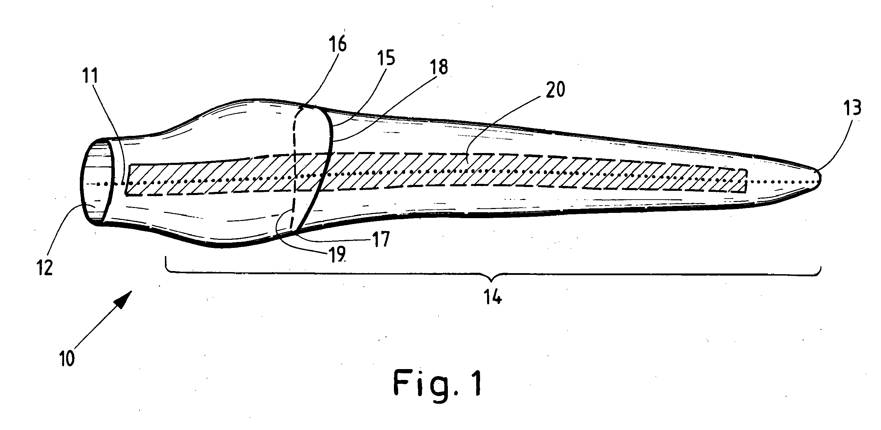

Fig. 1 zeigt schematisch ein Rotorblatt 10 einer Windenergieanlage. Das Rotorblatt 10 erstreckt sich entlang seiner Längserstreckung 11 von einer Rotorblattwurzel 12 zu einer Rotorblattspitze 13. In einem aerodynamischen Bereich 14 sind Querschnittsprofile 15 vorgesehen, die sich von einer Profilvorderkante 16 (Nase) zu einer Profilhinterkante 17 erstrecken, wobei die Profilvorderkante 16 und die Profilhinterkante 17 eine Saugseite 18 und eine Druckseite 19 des Rotorblatts 10 voneinander trennen.

Zur Stabilisierung des Rotorblatts 10 ist ein Gurt 20 vorgesehen, der die wesentlichen Kräfte, die auf das Rotorblatt wirken, aufnimmt. Der Gurt 20 erstreckt sich im Wesentlichen von der Rotorblattwurzel 12 bis im Wesentlichen zur Rotorblattspitze 13. Der Gurt 20 kann sich auch vollständig von der Rotorblattwurzel 12 bis fast vollständig zur Rotorblattspitze 13 erstrecken. Üblicherweise endet der Gurt allerdings etwas vor der Rotorblattspitze 13. Der Gurt 20 kann sich auch in einem Winkel zur Längserstreckung 11 befinden.

Die Erfindung sieht nun vor, einen Gurt 20 für Rotorblätter zu verwenden, der weniger faserverstärkte Lagen 21-21 "' aufweist, die dafür aber dicker als üblich sind und eine vergleichsweise höhere Längssteifigkeit aufweisen.

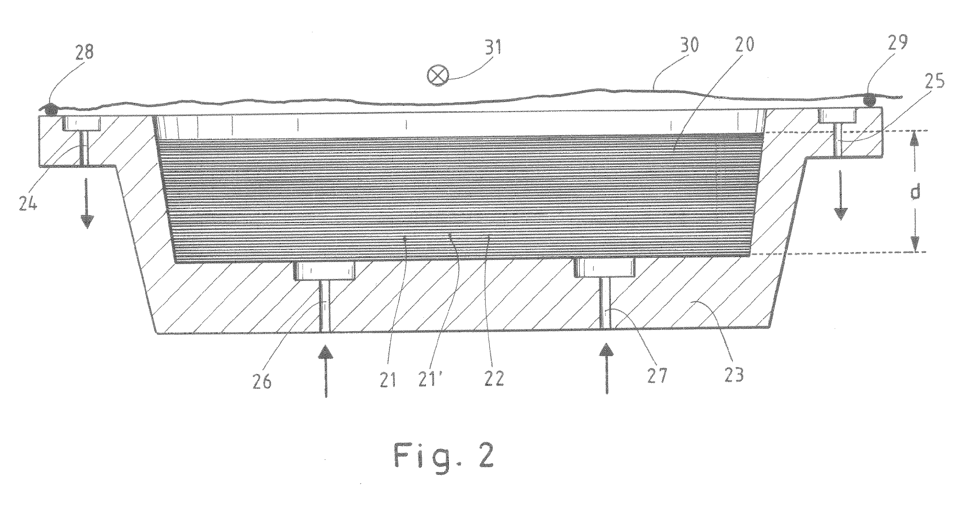

In Fig. 2 ist beispielsweise ein Gurt 20 in einer schematischen Schnittdarstellung in einer Fertigungsform 23 angeordnet dargestellt. Der Gurt 20 umfasst 43 Einzellagen 21-21"'. Diese Einzellagen 21-21"' weisen ein Gelege aus beispielsweise Glasfasern oder Basaltfasern auf, die im Wesentlichen unidirektional in Längsrichtung 31 ausgerichtet sind. Um einen entsprechenden Verbund zu bilden, ist Harz 22 in die Gelege entsprechend eingebracht worden. Dieses kann beispielsweise durch eine vakuumunterstützte Infusionstechnik geschehen, wie dieses in Fig. 2 angedeutet ist.

Der Gurt wird entsprechend so hergestellt, dass beispielsweise Prepreg-Lagen, in diesem Fall 43 Prepreg-Lagen, übereinander gestapelt werden oder trockene Glasfaserlagen, die eine entsprechend erfindungsgemäße Dicke aufweisen. Anschließend wird eine Vakuumfolie 30 über die Fertigungsform 23 gelegt, und zwar auf Abdichtungen 28 und 29. Es wird dann bei den Harzangussanschlüssen 26 und 27 Harz, beispielsweise Epoxidharz, zur Verfügung gestellt und Vakuum an die Vakuumanschlüsse 24 und 25 angebracht. Hierdurch wird Harz in die Fertigungsform 23 und damit in das Gelege bzw. in den zu fertigenden Gurt 20 gesaugt. Sobald die oberste entsprechend vollständig auch mit Harz getränkt ist, wird die Vakuumpumpe abgeschaltet und der Gurt kann aushärten. Es ergibt sich ein entsprechender Gurt 20 mit einer Dicke d.

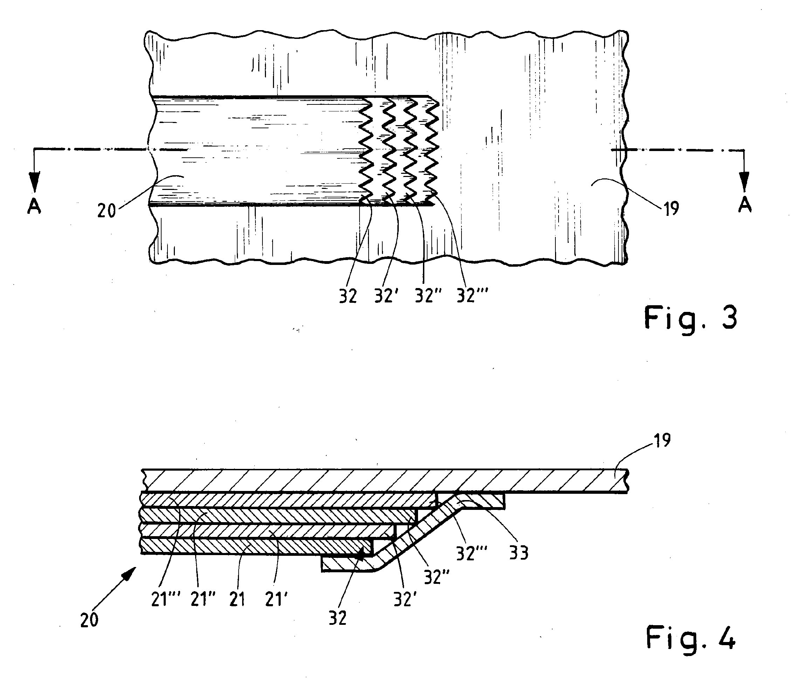

Fig. 3 ist schematisch eine Draufsicht auf einen Teil eines Rotorblatts von innen dargestellt. Auf der Druckseite 19 ist von innen der Gurt 20 aufgebracht. Am jeweiligen Lagenende 32, 32', 32", 32"' sind die entsprechenden Lagen 21-21 "' in einem Zickzack bzw. gezackt abgeschnitten. Hierdurch können die jeweiligen Lagen im Endbereich etwas zur Seite ausweichen, so dass sich eine Schäftung bzw. eine Fase in der Lagendicke in dem Endbereich 32-32"' ergibt. Hierdurch kann der Delaminationsgefahr sehr gut entgegengewirkt werden.

In Fig. 4 ist eine schematische Schnittdarstellung entlang des Schnitts A-A der Fig. 3 dargestellt. Zur besseren Veranschaulichung ist in Fig. 3 allerdings die Abdecklage 33 nicht dargestellt gewesen, die nun in Fig. 4 gezeigt ist.

Zur Vereinfachung sind hier auch in den Figuren 3 nur vier Einzellagen 21-21"' dargestellt. Insbesondere auch durch die Abdecklage kann der Delamination entgegengewirkt werden. Diese erstreckt sich über die Endbereiche der Einzellagen 21 bis 21"' zu der Innenseite der Druckseite 19 des Rotorblatts.

Der erfindungsgemäße Gurt zeichnet sich durch faserverstärkte Einzellagen mit einer sehr viel höheren Steifigkeit aus als bisher verwendet, wobei insbesondere übliche Fasern, wie Glasfasern und/oder Basaltfasern Verwendung finden.

In einer ersten Variante werden Glasfaser-Prepregs verwendet, die unidirektional ausgerichtet sind, d.h. mehr als 90 % der Fasern sind in Längsrichtung 31 ausgerichtet. Diese haben beispielsweise eine Dicke von ca. 1,3 mm und ein E-Modul in Längsrichtung von ca. 40.000 N/mm² bei einem Flächengewicht von 1.650 g/m² der Glasfasern. Hierdurch ergibt sich eine Steifigkeit von 52.000 N/mm.

In einer weiteren Variante wird ein Glasfaser-Prepreg bzw. mehrere entsprechende Prepregs mit unidirektionalen Fasern mit einer jeweiligen Dicke von ca. 2,6 mm verwendet. Die faserverstärkte Einzellage hat ein Elastizitätsmodul in Längsrichtung von ca. 40.000 N/mm² bei einem Flächengewicht von 3.300 g/mm² für die Glasfasern an sich. Hierdurch ergibt sich eine Steifigkeit von 104.000 N/mm.

Bei einer weiteren Variante wurde ein trockenes Glasfasergelege mit unidirektionalen Fasern verwendet, das ein Flächengewicht der Faser von 3.800 g/m² hat. Diese faserverstärkte Einzellage hat dann bei Verwendung von 40 Einzellagen eine mittlere Dicke von ca. 3 mm gehabt. Das Elastizitätsmodul in Längsrichtung war ungefähr 40.000 N/mm². Es ergab sich eine Steifigkeit von 120.000 N/mm. Die letzte Variante wurde für ein 46 m langes Rotorblatt verwendet.

Die erste Variante wurde mit 60 Einzellagen für ein ca. 60 m Blatt ausgelegt.

In einer vierten Variante wurde ein Basaltfaser-Prepreg verwendet, das unidirektional ausgerichtete Basaltfasern aufweist, d.h. ungefähr 90 % der Fasern sind in Längsrichtung ausgerichtet. Die Prepregs hatten eine Dicke von ca. 0,95 mm und ein Elastizitätsmodul in Längsrichtung von ca. 70.000 N/mm². Ferner ist ein Flächengewicht von 1.200 g/m² Basaltfasern vorgesehen gewesen. Dieses ergibt eine Längssteifigkeit von 66.200 N/mm.

In einer fünften Variante wurde ein Basaltfaser-Prepreg einer Dicke von 1,1 mm mit unidirektionalen Basaltfasern verwendet, bei dem ein Elastizitätsmodul in Längsrichtung von 80.000 N/mm² vorgesehen war. Hieraus ergibt sich eine Längssteifigkeit von 88.000 N/mm je Einzellage.

In einer sechsten Variante wurde ein Basaltfaser-Prepreg einer Dicke von 1,5 mm mit unidirektionalen Basaltfasern verwendet, bei dem ein Elastizitätsmodul in Längsrichtung von 100.000 N/mm² vorgesehen war. Hieraus ergibt sich eine Längssteifigkeit von 150.000 N/mm je Einzellage.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Rotorblatt
- 11: Längserstreckung
- 12: Rotorblattwurzel
- 13: Rotorblattspitze
- 14: aerodynamischer Bereich
- 15: Querschnittsprofil
- 16: Profilvorderkante
- 17: Profilhinterkante
- 18: Saugseite
- 19: Druckseite
- 20: Gurt
- 21, 21', 21", 21"': faserverstärkte Einzellage
- 22: Harz
- 23: Fertigungsform
- 24: Vakuumanschluss
- 25: Vakuumanschluss
- 26: Harzangussanschluss
- 27: Harzangussanschluss
- 28: Abdichtung
- 29: Abdichtung
- 30: Vakuumfolie
- 31: Längsrichtung
- 32, 32', 32",32"': Lageende
- 33: Abdecklage
- d: Dicke

## Patentansprüche

1. Gurt (20) eines Rotorblatts (10) einer Windenergieanlage, umfassend eine Mehrzahl von faserverstärkten Einzellagen (21, 21', 21", 21"'), die miteinander durch ein Harz (22) verbunden sind, **dadurch gekennzeichnet, dass** wenigstens eine faserverstärkte Einzellage (21-21"') eine Längssteifigkeit von mehr als 50.000 N/mm bei einer Dicke von mehr als 0,9 mm hat.

2. Gurt (20) nach Anspruch 1, **dadurch gekennzeichnet, dass** im Wesentlichen alle Einzellagen (21-21"') jeweils eine Längssteifigkeit von mehr als 50.000 N/mm bei einer jeweiligen Dicke von mehr als 0,9 mm haben.

3. Gurt (20) nach Anspruch 1 oder 2, **dadurch gekennzeichnet, dass** die Längssteifigkeit der Einzellage (21-21"') größer als 60.000 N/mm, insbesondere größer als 70.000 N/mm, insbesondere größer als 80.000 N/mm, insbesondere größer als 90.000 N/mm, insbesondere größer als 100.000 N/mm, ist.

4. Gurt (20) nach einem der Ansprüche 1 bis 3, **dadurch gekennzeichnet, dass** die Dicke der Einzellage (21-21"') größer oder gleich 0,95 mm, insbesondere größer oder gleich 1,5 mm, insbesondere größer oder gleich 2,0 mm, insbesondere größer oder gleich 2,5 mm ist.

5. Gurt (20) nach einem der Ansprüche 1 bis 4, **dadurch gekennzeichnet, dass** die Fasern der faserverstärkten Einzellagen (21-21"') Glasfasern und/oder Basaltfasern sind.

6. Gurt (20) nach einem der Ansprüche 1 bis 5, **dadurch gekennzeichnet, dass** die Einzellagen (21-21 "') im Wesentlichen ein unidirektionales Fasergelege ist, bei dem mehr als 80%, insbesondere mehr als 89%, der Fasern in Längsrichtung (31) des Gurts (20) ausgerichtet sind.

7. Gurt (20) nach einem der Ansprüche 1 bis 6, **dadurch gekennzeichnet, dass** das Faserflächengewicht der Einzellage (21-21"') mehr als 1.000 g/m², insbesondere mehr als 2.000 g/m², insbesondere mehr als 3.000 g/m², insbesondere mehr als 3.500 g/m², ist.

8. Gurt (20) nach einem der Ansprüche 1 bis 7, **dadurch gekennzeichnet, dass** der Gurt (20) ohne Kohlefasern und ohne Aramidfasern oder alternativ im Wesentlichen ohne Kohlefasern und im Wesentlichen ohne Aramidfasern ausgestaltet ist.

9. Gurt (20) nach einem der Ansprüche 1 bis 8, **dadurch gekennzeichnet, dass** die Einzellage (21-21 "') als Prepreg ausgestaltet ist.

10. Gurt (20) nach einem der Ansprüche 1 bis 9, **dadurch gekennzeichnet, dass** wenigstens ein Lagenende (32-32"') einer Einzellage (21-21"') geschäftet, und insbesondere als Zickzack ausgeschnitten, ist.

11. Rotorblatt (10) einer Windenergieanlage mit wenigstens einem Gurt nach einem der Ansprüche 1 bis 10.

12. Rotorblatt (10) nach Anspruch 11, **dadurch gekennzeichnet, dass** der Gurt (20) ein Hauptgurt ist, der sich im Wesentlichen von einer Rotorblattwurzel (12) bis zu einer Rotorblattspitze (13) erstreckt, wobei weniger als 60 Einzellagen (21-21"'), insbesondere weniger als 50 Einzellagen (21-21"'), insbesondere weniger als 40 Einzellagen (21-21"'), insbesondere weniger als 30 Einzellagen (21-21"'), im Gurt (20) vorgesehen sind.

13. Rotorblatt (10) nach Anspruch 11 oder 12, **dadurch gekennzeichnet, dass** der Gurt (20) eine Länge von mehr als 30 m, insbesondere mehr als 35 m, insbesondere mehr als 40 m, insbesondere mehr als 45 m, insbesondere mehr als 50m, hat.
